# EUROPÄISCHE PATENTSCHRIFT

(11) **EP 0 473 052 B1**
(45) Veröffentlichungstag und Bekanntmachung des Hinweises auf die Patenterteilung: **18.01.1995**
(21) Anmeldenummer: 91113984.8
(22) Anmeldetag: 21.08.1991
(51) Int. Cl.: E01C 5/00

(54) **Formstein-Element**
Block element
Elément de pavage

(30) Priorität: 30.08.1990 DE 4027517
(43) Veröffentlichungstag der Anmeldung: 04.03.1992
(73) Patentinhaber: Scholta, Winfried E., D-67434 Neustadt (DE)
(72) Erfinder: Scholta, Winfried E., D-67434 Neustadt (DE)
(74) Vertreter: Langfinger, Klaus-Dieter, Dr.

(56) Entgegenhaltungen:
- DE-A- 2 818 838
- DE-C- 66 928
- DE-U- 1 855 734
- DE-U- 6 923 429
- DE-U- 8 000 566
- FR-A- 1 004 695
- GB-A- 1 107 097

## Beschreibung

Die Erfindung bezieht sich auf ein Formstein-Bauelement zur Befestigung, Begeh- und Befahrbarmachung von Böden, zur Aufnahme von Erde und anderen Substraten in waagrechter bis senkrechter Anordnung, insbesondere zum zweck einer Bepflanzung.

Es gibt viele Formsteine zur deckenden Untergrund-Befestigung. Alle werden u.a. zum Zweck der Entwässerung mit Fugen verlegt. Pflanzen können hier nicht gedeihen bzw. sind unerwünscht. Die darunter befindlichen Böden verfestigen sich an den Punkten ständiger Belastung und können praktisch nicht mehr atmen. Wasser dringt nicht mehr tiefer und wird mit aufwendiger Drainage abgeführt.

Wiesen oder Rasen saugen Wasser wie ein Schwamm auf und geben es langsam nach unten ab. Pflanzen und Bodengetier gedeihen hier gut. Ein Begehen oder Befahren ist in trockenem Zustand möglich, in nassem aber nur bedingt. Je nach Belastung nehmen Pflanzen Schaden.

Rasen-Gitter-Formsteine können hier zur Lösung des Problems von Belastbarkeit und Bepflanzbarkeit beitragen. Unterschiedlich in Form und Material, sickert Wasser in ihre Zwischenräume ein, der Boden atmet. Bodenfauna und Flora finden Platz zum Leben, Wurzeln und Wachsen.

Nachteilig ist aber hier, daß fast alle diese Formsteine senkrecht zum Untergrund weisende Öffnungen und Seitenwände haben. Bei hohen Verkehrslasten drückt sich dieser punktuell belastete Formstein mangels seitlichem Verbund immer stärker in den Boden. Aus den Zwischenräumen quetscht sich Untergrund nach oben und wird dort wieder verdichtet. Es entsteht ein ähnlicher Zustand wie bei den deckenden Formsteinen. Darüber hinaus werden diese Formsteine meist nur für den gleichen Zweck verwandt.

Aus der GB-A-1 107 097 ist ein einseitig offenes, durch Seitenwände begrenztes, im Querschnitt vieleckiges Formstein-Grundelement bekannt, welches im Längsschnitt keine Rhomboidform aufweist.

Die DE-C-66928 beschreibt ein Straßenpflaster aus Zement-Beton-Steinen, wobei zwischen den einzelnen Steinen eine Lastverteilung erfolgt.

Aufgabe dieser Erfindung ist es, ein Bauelement zu schaffen, das vorgenannte Nachteile minimiert, geringeren Materialbedarf hat, leicht zu verarbeiten und wesentlich vielseitiger und flexibler in der Nutzbarkeit ist.

Diese Aufgabe wird erfindungsgemäß gelöst durch ein Formstein-Grundelement mit einseitig offenem, im Querschnitt vieleckigen und/oder bogenförmigen Querschnitt welches durch sich in Längsrichtung erstreckende Wände (S, S1 und S2) begrenzt wird, wobei
a) die Wände (S, S1, S2) sich im Querschnitt des Formstein-Grundelements in jeweils einer ihrer Begrenzungsflächen schneiden;
b) die Außenfläche einer Wand (S) zu den an der im Querschnitt offenen Seite des Formstein-Grundelements gebildeten Aufstandsflächen (US1, US2) zweier Wände parallel verläuft
wobei es wesentlich ist, daß
c) das Formstein-Grundelement im Längsschnitt rhomboidförmig ist, und
d) die im Querschnitt des Formstein-Grundelements an die Aufstandsflächen (US1, US2) anschließenden Außenflächen (AS1, AS2) der die Aufstandsflächen (US1, US2) bildenden Wände normal zu den anliegenden Aufstandsflächen verlaufen.

Bevorzugte Ausgestaltungen des erfindungsgemäßen Formstein-Grundelements sind den Unteransprüchen und der nachfolgenden Beschreibung zu entnehmen.

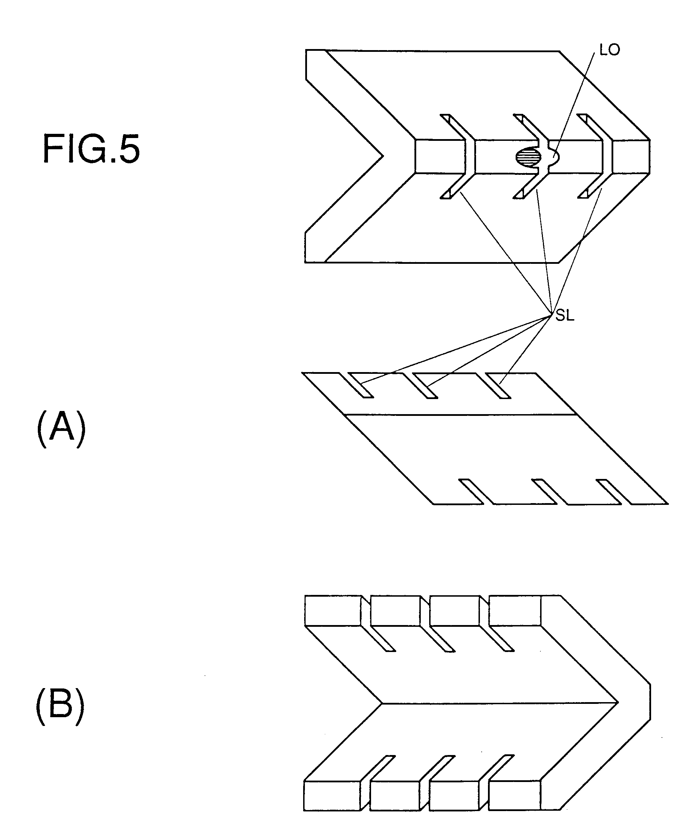

Gemäß einer ersten bevorzugten Ausführungsform (vgl. Fig. 5B) sind in die an der im Querschnitt offenen Seite gebildeten Aufstandsflächen zweier Wände senkrecht zu deren Längsachse ein oder mehrere Schlitze eingeformt. Eine weitere bevorzugte Ausführungsform (vgl. Fig. 5A) weist (ggf. zusätzlich zu den in die Aufstandsflächen geformten Schlitzen) in der Außenfläche der Wand, die parallel zu den an der im Querschnitt offenen Seite zweier Wände gebildeten Aufstandsflächen Schlitze und/oder Löcher auf, wobei die Schlitze senkrecht zur Längsachse verlaufen und vorzugsweise mit den Schlitzen in den Aufstandsflächen fluchten.

Durch die erfindungsgemäß im Längsschnitt rhomboide Formgebung ergeben sich wesentliche Vorteile gegenüber rechtwinkligen Formen.

Bei gleichem Materialverbrauch ist durch die schräge Schnittfläche je nach Wandungsstärke die belastete und die bodenseitig lastabtragende Auflagefläche wesentlich vergrößert.

Beim Verlegen liegt weiterhin von jedem Formstein-Grundelement die schräge Oberseitenhälfte der geschlossenen Formstein-Grundelement-Seite auf einer offenen, schrägen Seitenwand-Grundseite des Anschluß-Formstein-Grundelements auf.

Dadurch haben alle Formstein-Grundelemente unter- und miteinander seitlich stützenden Verbund und Lastverteilung.

Letztlich werden durch die schräg zu jeder Druckrichtung stehenden Element-Innen- bzw. Außenseiten alle abwärts gerichteten Kräfte bzw. sich nach oben drückender Untergrund zusätzlich verteilt bzw. abgeleitet.

Beim Verlegen der Formstein-Grundelemente können je nach zu erwartender Belastung entsprechend ausgebildete Verbindungs-Elemente in die vorstehend genannten eingeformten Öffnungen (Schlitze und Löcher) eingeschoben werden. Sie passen in die ihnen beim Verlegen gegenüberliegenden Öffnungen (Schlitze, Löcher) des Anschluß-Formstein-Grundelements und verbinden so die Formstein-Grundelemente mit- und untereinander zu einer noch stärker belastbaren Gesamtfläche.

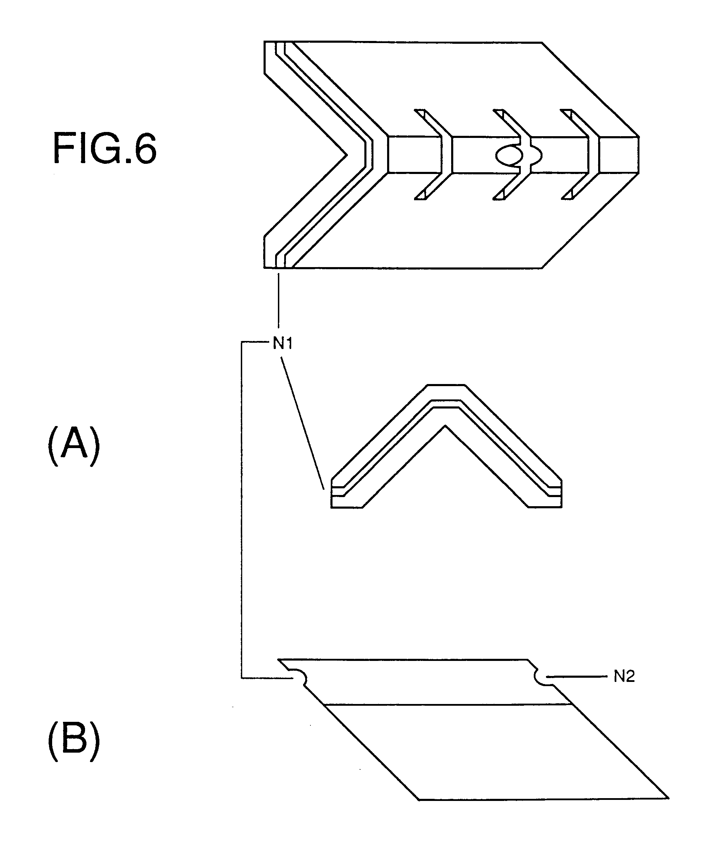

Erfindungsgemäß können in die sich im Querschnitt des Formstein-Grundelements an die Aufstandsflächen zweier Wände anschließenden Innenflächen zwischen in diesen Flächen diagonal gegenüberliegenden Eckpunkten Nuten eingeformt werden (vgl. Fig. 6). An ebenen, besonders stark belasteten Stellen dienen sie zur Aufnahme von dreieckigen Formteilen, wodurch die bodenwärts zeigende Auflagefläche zusätzlich vergrößert werden kann und trotzdem eine Innenhälfte offen bleibt. An schrägen Bodenstellen sind diese Formteile an der bodenwärts zeigenden Seite zur besseren Bodenverankerung der Formstein-Grundelement entsprechend verlängert.

Erfindungsgemäß können in in das Formstein-Grundelement in Längsrichtung begrenzende Flächen (Stirnflächen) der Formstein-Grundelemente dem Wandungsverlauf folgende, mittig zur Wandstärke verlaufende Nuten eingeformt sein. Sie dienen zur Aufnahme von Dichtungselementen, wenn in besonderen Einsatzfällen die Formstein-Grundelemente an den Stirnseiten dicht miteinander verbunden werden müssen.

Durch die erfindungsgemäß gegebene Symmetrie des Formstein-Grundelements paßt es an allen Seiten an die, bei Bedarf gedrehten entsprechenden Seiten des Gegen-Formstein-Grundelements. Aus Gründen rationeller Fertigung können auch zwei oder mehr gleiche Einzel-Formstein-Grundelemente zu einem den jeweiligen Anforderungen entsprechend geformten Verbundelement fest zusammengeformt werden.

Im wesentlichen wird durch die in Längsrichtung rhomboidförmige Formgebung und die schräg zur Auflagefläche liegende Belastungsfläche des Formstein-Grundelements eine vergrößerte Lastverteilung ermöglicht.

Dies wird durch den unter- und miteinander seitlich stützenden Verbund aller Formstein-Grundelemente weiter erhöht.

Die Möglichkeit der festen, aber jederzeit wieder lösbaren Verzahnung der Formstein-Elemente unter- und miteinander durch Verbindungs-Elemente bzw. die durch das Einschieben von entsprechenden Formteilen ermöglichte Grundverankerung ergibt einen höchstmöglichen Wirkungsgrad auf ebenen, steilen bis senkrechten Flächen.

Nicht zu vergessen ist, daß auch die Dimensionen des erfindungsgemäßen Formstein-Grundelements variabel sind. Damit ergeben sich Anwendungsmöglichkeiten an ganz anderen Einsatzorten.

Durch die Summe einzelner oder aller vorgenannter Punkte ist es möglich, trotz höherem Nutzungsgrad mit erheblich weniger Material auszukommen, was den Herstellungs- bzw. den Verkaufspreis senken kann. Neben verringerten Transportkosten erleichtert das geringere Gewicht auch die schwere Verlegearbeit. Leichtere Elemente sind schneller verlegt. Dadurch sinken auch die Lohnkosten.

Rationelles Herstellen von größeren, bedarfsgerechten Verbundformen gleichartiger Formstein-Grundelemente kann weitere Kosteneinsparungen möglich machen.

Letztlich aber wird durch die geringeren Wandstärken größere Begrünungsfläche frei. Die Bodenfauna kann wieder gedeihen.

Die Flora kann in den schrägen Erdkammern mit größtmöglichem Schutz vor Bodenverdichtung besser wachsen. Mit Baumringen aus diesen Elementen erholen sich kranke Verkehrs-Bäume wieder.

Die größere Fläche kann besser atmen. Durch die schräge Wasserabführung in porösem Erdreich saugt sich der Boden besser voll und reguliert den lebenswichtigen Feuchtigkeitshaushalt.

So dient die Erfindung vor allem auch dem Naturschutz.

Werden die Elemente neben den üblichen Baumaterialien aus recycelten, minderwertigen Altkunststoffen hergestellt, können sie neben den vorgenannten Möglichkeiten durch den generell hohen Bedarf an Bodenbelag-Formsteinen und den dadurch entsprechenden Materialbedarf einen nicht unwesentlichen Beitrag zur Beseitigung des Müllberges und zur Entlastung der Deponien leisten.

Anhand einiger Zeichnungen wird die Erfindung näher erläutert. Es zeigen:

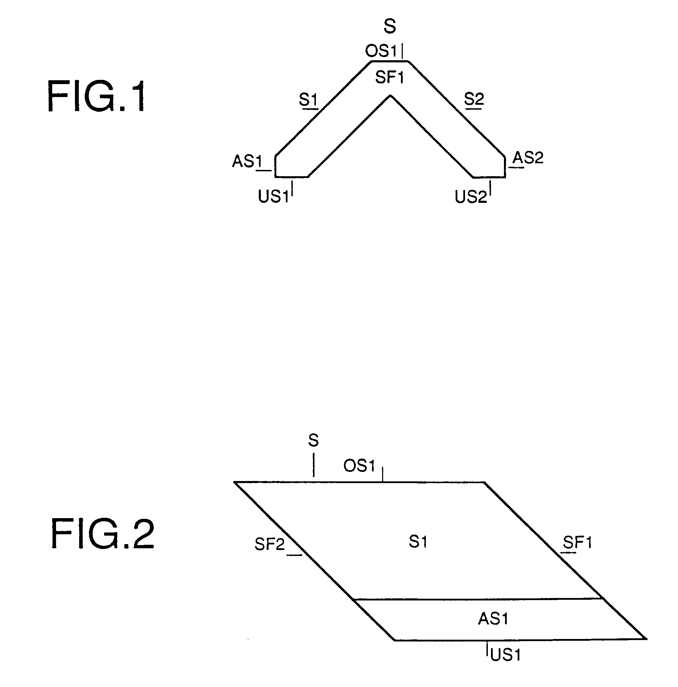

- Fig. 1: Ansicht auf die vordere Schnittfläche eines Formstein-Grundelements;
- Fig. 2: Ansicht auf die rhomboid-förmige Seitenfläche eines Formstein-Grundelements;

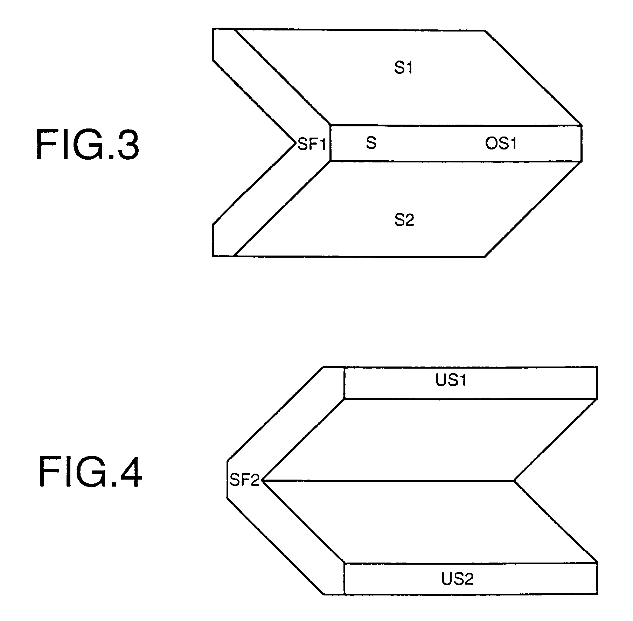

- Fig. 3: Aufsicht auf die geschlossene Element-Seite eines Formstein-Grundelements;
- Fig. 4: Ansicht eines Formstein-Grundelements von unten, d.h. vor der offenen Element-Seite;
- Fig. 5: Aufsicht auf die geschlossene Element-Seite eines Formstein-Grundelements mit eingeformten Schlitzen bzw. Loch;
- Fig. 5a: Ansicht auf die rhomboid-förmige Seitenfläche eines Formstein-Grundelements mit eingeformten Schlitzen auf Grund- und Oberseite;
- Fig. 5b: Ansicht eines Formstein-Grundelements von unten, d.h. von der offenen Element-Seite mit eingeformten Schlitzen;
- Fig. 6: Aufsicht auf die geschlossene Element-Seite eines Formstein-Grundelements mit eingeformten Schlitzen bzw. Loch und eingeformter Nut auf einer das Formstein-Grundelement in Längsrichtung begrenzenden Fläche (Stirnfläche);
- Fig. 6a: Ansicht auf eine das Formstein-Grundelement in Längsrichtung begrenzende Fläche eines Formsteines mit eingeformter Nut in dieser Fläche;
- Fig. 6b: Ansicht auf die rhomboid-förmige Seitenfläche eines Formstein-Grundelements mit einer Formmöglichkeit für den Querschnitt einer eingeformten Nut in den das Formstein-Grundelement in Längsrichtung begrenzenden Flächen;

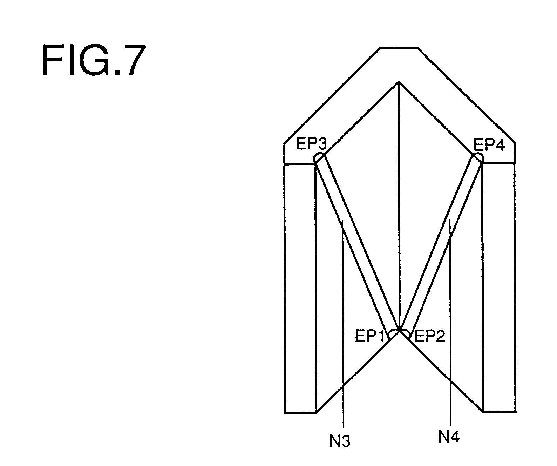

- Fig. 7: Ansicht eines Formsteins von unten, d.h. von der offenen Element-Seite mit eingeformten Nuten in an die Aufstandsflächen (US1, US2) angrenzenden Innenflächen.

Eine weitere Ausführungsform der Erfindung ist ein Formstein-Bauelement, welches aus mindestens zwei gleichartigen Formstein-Grundelementen nach einem der Ansprüche 1 bis 5 aufgebaut ist, welche
a) an den Außenflächen (AS1, AS2), die sich im Querschnitt der Formstein-Grundelemente an die Aufstandsflächen (US1, US2) der die Aufstandsflächen bildenden Wände anschließen, und/oder
b) an den das Formstein-Grundelement in Längsrichtung begrenzenden Querschnittsflächen (SF1, SF2), und/oder
c) an den Aufstandsflächen (US1, US2) der sich in Längsrichtung erstreckenden Wände (S1, S2), und/oder
d) an den Außenflächen einer Wand (S), die zu den an der im Querschnitt offenen Seite der Formstein-Grundelemente gebildeten Aufstandsflächen (US1, US2) zweier Wände parallel verlaufen
fest zusammengeformt sind.

## Patentansprüche

1. Formstein-Grundelement, mit einseitig offenem, vieleckigem und/oder bogenförmigem Querschnitt, welches durch sich in Längsrichtung erstreckende Wände (S, S1 und S2) begrenzt wird, wobei
a) die Wände (S, S1, S2) sich im Querschnitt des Formstein-Grundelements in jeweils einer ihrer Begrenzungsflächen schneiden,
b) die Außenfläche einer Wand (S) zu den an der im Querschnitt offenen Seite des Formstein-Grundelements gebildeten Aufstandsflächen (US1, US2) zweier Wände parallel verläuft,
dadurch gekennzeichnet, daß
c) das Formstein-Grundelement im Längsschnitt rhomboidförmig ist, und
d) die an die Aufstandsflächen (US1, US2) im Querschnitt des Formstein-Grundelements anschließenden Außenflächen (AS1, AS2) der die Aufstandsflächen (US1, US2) bildenden Wände normal zu den anliegenden Aufstandsflächen verlaufen.

2. Formstein-Grundelement nach Anspruch 1, dadurch gekennzeichnet, daß in die an der im Querschnitt offenen Seite gebildeten Aufstandsflächen (US1, US2) senkrecht zu deren Längsachse Schlitze (SL) eingeformt sind.

3. Formstein-Grundelement nach einem der Ansprüche 1 bis 2, dadurch gekennzeichnet, daß in die Außenfläche der Wand (S), die parallel zu den an der im Querschnitt offenen Seite des Formstein-Grundelements gebildeten Aufstandsflächen (US1, US2) verläuft, senkrecht zu deren Längsachse ein oder mehrere Schlitze (SL) oder Löcher (LO) eingeformt sind.

4. Formstein-Grundelement nach Anspruch 1, dadurch gekennzeichnet, daß in im Querschnitt des Formstein-Grundelements an die Aufstandsflächen (US1, US2) anschließende Innenflächen zwischen in diesen Flächen diagonal gegenüberliegenden Eckpunkten (EP1, EP2, EP3, EP4) jeweils eine durchgehende Nut (N3, N4) eingeformt ist.

5. Formstein-Grundelement nach einem der Ansprüche 1 bis 4, dadurch gekennzeichnet, daß in die das Formstein-Grundelement in Längsrichtung begrenzende Querschnittsflächen (SF1, SF2) der sich in Längsrichtung erstreckenden Wände mittig zur Wandstärke verlaufende, durchgehende Nuten (N1, N2) geformt sind, die dem Verlauf der Querschnittsflächen (SF1, SF2) folgen.

6. Formstein-Bauelement, dadurch gekennzeichnet, daß es aus mindestens zwei gleichartigen Formstein-Grundelementen nach einem der Ansprüche 1 bis 5 aufgebaut ist, welche
a) an den Außenflächen (AS1, AS2), die sich im Querschnitt der Formstein-Grundelemente an die Aufstandsflächen (US1, US2) der die Aufstandsflächen bildenden Wände anschließen, und/oder
b) an den das Formstein-Grundelement in Längsrichtung begrenzenden Querschnittsflächen (SF1, SF2), und/oder
c) an den Aufstandsflächen (US1, US2) der sich in Längsrichtung erstreckenden Wände (S1, S2), und/oder
d) an den Außenflächen einer Wand (S), die zu den an der im Querschnitt offenen Seite der Formstein-Grundelemente gebildeten Aufstandsflächen (US1, US2) zweier Wände parallel verlaufen
fest zusammengeformt sind.

## Claims

1. A molded base element which has a polygonal and/or arc-shaped cross-section open on one side and which is limited by walls (S, S1 and S2) extending in the longitudinal direction,
a) the walls (S, S1, S2) intersecting in one of their limiting surfaces in the cross-section of the molded base element and
b) the outer surface of one wall (S) being parallel to the base surfaces (US1, US2) of two walls, which surfaces are formed on that side of the molded base element which is open in cross-section,
wherein
c) the molded base element is rhomboid-shaped in longitudinal section and
d) the outer surfaces (AS1, AS2) of the walls forming the base surfaces (US1, US2), which outer surfaces are adjacent to the base surfaces (US1, US2) in the cross-section of the molded base element, are normal to the adjacent base surfaces.

2. A molded base element as claimed in claim 1, wherein slots (SL) are formed in the base surfaces (US1, US2) formed on the side which is open in cross-section, said slots being perpendicular to the longitudinal axis of said base surfaces.

3. A molded base element as claimed in claim 1 or 2, wherein one or more slots (SL) or holes (LO) are formed in the outer surface of the wall (S) which is parallel to the base surfaces (US1, US2) formed on that side of the molded base element which is open in cross-section, said slots or holes being perpendicular to the longitudinal axis of said outer surface of the wall.

4. A molded base element as claimed in claim 1, wherein a continuous groove (N3, N4) is formed in inner surfaces adjacent to the base surfaces (US1, US2) in the cross-section of the molded base element, between corners (EP1, EP2, EP3, EP4) diagonally opposite in these surfaces.

5. A molded base element as claimed in any of claims 1 to 4, wherein continuous grooves (N1, N2) running centrally with respect to the wall thickness and following the course of the cross-sectional surfaces (SF1, SF2) are formed in the cross-sectional surfaces (SF1, SF2) of the walls extending in the longitudinal direction, which cross-sectional surfaces limit the molded base element in the longitudinal direction.

6. A molded structural element, which is composed of at least two molded base elements of the same type, as claimed in any of claims 1 to 5, which are firmly combined
a) at the outer surfaces (AS1, AS2) which, in the cross-section of the molded base elements, are adjacent to the base surfaces (US1, US2) of the walls forming the base surfaces, and/or
b) at the cross-sectional surfaces (SF1, SF2) limiting the molded base element in the longitudinal direction, and/or
c) at the base surfaces (US1, US2) of the walls (S1, S2) extending in the longitudinal direction, and/or
d) at the outer surfaces of a wall (S) which are parallel to the base surfaces (US1, US2) of two walls, which base surfaces are formed on that side of the molded base elements which is open in cross-section.

## Revendications

1. Elément de pavage moulé avec section transversale ouverte d'un côté, polygonale et/ou arquée, qui est limité par des parois (S, S1 et S2) s'étendant dans le sens longitudinal,
a) les parois (S, S1, S2) se coupant dans la section transversale de l'élément de pavage moulé dans chaque fois l'une de leurs surfaces de délimitation,
b) la surface externe d'une paroi (S) étant parallèle aux surfaces d'appui (US1, US2) de deux parois, surfaces formées du côté ouvert en section transversale de l'élément de pavage,
caractérisé en ce que
c) l'élément de pavage moulé a une forme de rhomboïde en section longitudinale et
d) et en ce que les surfaces externes (AS1, AS2) des parois formant les surfaces d'appui (US1, US2), qui sont contiguës aux surfaces d'appui (US1, US2) en section transversale de l'élément de pavage, sont disposées normalement par rapport aux surfaces d'appui attenantes.

2. Elément de pavage moulé selon la revendication 1, caractérisé en ce que des fentes (SL) sont réalisées dans les surfaces d'appui (US1, US2) formées sur le côté ouvert en section transversale, perpendiculairement à leur axe longitudinal.

3. Elément de pavage moulé selon l'une quelconque des revendications 1 à 2, caractérisé en ce que, dans la surface externe de la paroi (S) qui est parallèle aux surfaces d'appui (US1, US2) formées du côté ouvert en section transversale de l'élément de pavage, sont réalisées une ou plusieurs fentes (SL) ou trous (LO) perpendiculairement à son axe longitudinal.

4. Elément de pavage moulé selon la revendication 1, caractérisé en ce que, dans les surfaces internes contiguës aux surfaces d'appui (US1, US2) en section transversale de l'élément de pavage, se trouve à chaque fois une gorge continue (N3, N4) entre des sommets diagonalement opposés de ces surfaces.

5. Elément de pavage moulé selon l'une quelconque des revendications 1 à 4, caractérisé en ce que, dans les surfaces en section transversale (SF1, SF2) délimitant l'élément de pavage dans le sens longitudinal des parois s'étendant dans le sens de la longueur, sont disposées des gorges (N1, N2) continues et centrées par rapport à l'épaisseur de la paroi qui suivent le tracé des surfaces en section transversale (SF1, SF2).

6. Elément de pavage moulé, caractérisé en ce qu'il est constitué d'au moins deux éléments de pavage moulé du même type selon l'une quelconque des revendications 1 à 5 qui sont fixés solidement ensemble
a) sur les surfaces externes (AS1, AS2) qui sont contiguës, en section transversale des éléments de base, aux surfaces de contact (US1, US2) des parois formant les surfaces d'appui et/ou
b) sur les surfaces en section transversale (SF1, SF2) délimitant l'élément de pavage dans le sens longitudinal, et/ou
c) sur les surfaces d'appui (US1, US2) des parois (S1, S2) s'étendant dans le sens longitudinal, et/ou
d) sur les surfaces externes d'une paroi (S) qui sont parallèles aux surfaces d'appui (US1, US2) de deux parois, surfaces qui sont formées sur le côté ouvert en section transversale des éléments de pavage moulés.
